# EUROPÄISCHE PATENTSCHRIFT

(11) **EP 0 890 005 B1**
(45) Veröffentlichungstag und Bekanntmachung des Hinweises auf die Patenterteilung: **21.05.2003**
(21) Anmeldenummer: 97920559.8
(22) Anmeldetag: 27.03.1997
(51) Int. Cl.: E04D 1/36, E04D 1/34, H01L 31/042

(54) **TRÄGERELEMENT ZUM BEFESTIGEN EINES FLACHEN PLATTENFÖRMIGEN BAUELEMENTS AUF EINEM SCHRÄGDACH**
BEARING ELEMENT FOR SECURING A FLAT PANEL-SHAPED UNIT TO A SLOPING ROOF
ELEMENT DE SUPPORT POUR FIXER UN ELEMENT DE CONSTRUCTION PLAT EN FORME DE PANNEAU SUR UN TOIT EN PENTE

(30) Priorität: 29.03.1996 DE 19612488
(43) Veröffentlichungstag der Anmeldung: 13.01.1999
(73) Patentinhaber: Lafarge Roofing Components GmbH & Co. KG, 61437 Oberursel (DE)
(72) Erfinder: RINKLAKE, Manfred, D-64823 Gro -Umstadt (DE); RÖSLER, Norbert, D-61440 Oberursel (DE)
(74) Vertreter: Schickedanz, Willi, Dr. Dipl.-Ing.
(86) Internationale Anmeldenummer: DE9700646
(87) Internationale Veröffentlichungsnummer: WO97037091

(56) Entgegenhaltungen:
- WO-A-94/24384
- DE-C- 151 738
- DE-C- 221 279
- FR-A- 2 491 112

## Beschreibung

Die Erfindung betrifft ein Befestigungssystem zum Befestigen eines flachen plattenförmigen Bauelements auf einem Schrägdach, insbesondere eines photovoltaischen Moduls, wobei ein Trägerelement in First-Trauf-Richtung verlegt an der Dachunterkonstruktion befestigbar ist.

Ein derartiges Trägerelement ist beispielsweise aus der DE 94 09 453.9 U1 bekannt. In dieser Schrift sind in Längsrichtung des Daches schuppenartig überdeckend angeordnete photovoltaische Module beschrieben. Als Längsrichtung wird nachfolgend die Linie First-Traufe, als Querrichtung eine Parallele zu First oder zur Traufe bezeichnet. Als Trägerelemente sind in First-Trauf-Richtung verlegte Holzprofile vorgesehen, die an ihrem firstseitigen Ende auf einer Dachlatte und an ihrem traufseitigen Ende auf einer parallel zu einer Dachlatte an dieser angrenzend verlegten Holzlatte aufliegen. Die Holzlatte ragt über die Oberkante der Dachlatte um annähernd die Dicke des photovoltaischen Moduls hinaus. Die Holzprofile weisen auf ihrer Oberfläche eine in Längsmitte verlaufende Vertiefung auf, so daß diese bei Anordnung an den Rändern zweier stumpf aneinanderstoßender photovoltaischer Module zur Ableitung von in den Spalt eingedrungenem Wasser dient. Nachteilig ist bei diesem System, daß parallel zu den Dachlatten zusätzliche Holzlatten verlegt werden müssen und daß zusätzliche den traufseitigen Rand der photovoltaischen Module umgreifende Sturmhaken zur Befestigung erforderlich sind.

Weiterhin ist eine Einrichtung zum Abdichten von Pfannendächern bekannt, die Eindeckstücke zum Befestigen einer Dachpfanne auf einem Schrägdach aufweist, wobei die Eindeckstücke in First-Traufe-Richtung verlegt sind (DE 151 738 C). Die Eindeckstücke weisen hierbei eine Stütze auf, die ein in Firstrichtung benachbartes Trägerelement abstützt. Das Abstützen erfolgt jedoch nicht in einer Höhe oberhalb der Oberfläche der auf dem Eindeckstück aufliegenden Dachpfanne.

Der Erfindung liegt die Aufgabe zugrunde ein Befestigungssystem mit einem Trägerelement für ein flaches plattenförmiges Bauelement, insbesondere für ein photovoltaisches Modul, zur Verfügung zu stellen, das aufgrund seiner Abmessung mehrere handelsübliche kleinformatige Dacheindeckungsplatten ersetzen kann, so daß dieses Bauelement sowohl in eine Dacheindeckung aus kleinformatigen Dacheindeckungsplatten integrierbar und auch nachträglich in ein bereits eingedecktes Dach ohne Anpassungsarbeiten einbaubar ist.

Diese Aufgabe wird gemäß den Merkmalen des Patentanspruchs 1 gelöst.

Zur Verlegung eines ersten Bauelements sind zumindest zwei in einer traufparallelen Reihe und in zueinander parallelen in First-Trauf-Richtung verlaufenden Linien angeordnete Trägerelemente erforderlich. Das unterste Trägerelement einer Linie wird mit seinem firstseitigen Endabschnitt an einer ersten Dachlatte befestigt, während sein traufseitiger Endabschnitt eine in Traufrichtung benachbarte Dacheindeckungsplatte überdeckt und beispielsweise mittels eines Sturmhakens an einer traufseitigen zweiten Dachlatte befestigt wird. Das erste Bauelement wird anschließend auf die Oberseite der unteren Trägerelemente aufgelegt. Das in derselben Linie folgende firstnahe Trägerelement wird im Bereich seines traufseitigen Endabschnitts mit der Stütze des unteren Trägerelements verbunden und firstseitig auf einer firstseitigen dritten Dachlatte aufgelegt. Hierbei wird das firstnahe Trägerelement in einer Höhe oberhalb der Oberfläche des ersten Bauelements abgestützt, so daß es zur Anpassung an den jeweiligen Dachlattenabstand in Trauf-Richtung verschoben werden kann, ohne dabei an das erste Bauelement anzustoßen.

Das firstnahe Trägerelement wird beim Verschieben so positioniert, daß sein firstseitiger Endabschnitt einerseits an der dritten Dachlatte befestigt werden kann und sein traufseitiger Endabschnitt andererseits das erste plattenförmige Bauelement firstseitig überdeckt. Der überdeckende traufseitige Endabschnitt des firstnahen Trägerelements verhindert daher ein Abheben des ersten Bauelements vom unteren Trägerelement. Auf zwei parallele firstnahe Trägerelemente wird anschließend ein zweites plattenförmiges Bauelement aufgelegt, wobei es einen firstseitigen Randabschnitt des ersten Bauelements schuppenartig überdeckt.

Bei einem photovoltaischen Modul mit einer Länge von 38 cm und einer Breite von 120 cm beträgt beispielsweise der Querabstand zwischen den Trägerelementen einer traufparallelen Reihe etwa 60 cm. Bei schuppenartiger Verlegung mehrerer Bauelemente zwischen First und Traufe können mehrere Trägerelemente in einer Fallinie angeordnet werden.

Die Länge eines Trägerelements ist größer als die Länge eines Bauelements und dieses ist wiederum länger als die größte Decklänge der benachbarten Dacheindeckungsplatten.

Die Stütze, welche die Last vom fußseitigen Endabschnitt eines überdeckenden Trägerelements auf das überdeckte Trägerelement überträgt, kann besonders stabil ausgeführt werden, wenn sie auf der Oberseite des Trägerelements im Bereich seines firstseitigen Endabschnitts angeordnet ist. Dieser Endabschnitt steht über den firstseitigen Rand des Bauelements über.

Die Herstellung des Trägerelements ist als gestanztes Blechteil möglich, wenn die Stütze als separates Bauteil ausgebildet ist. Die Stütze kann beispielsweise als Bock aus abgewinkeltem Blech ausgeführt sein, wobei die Enden der Schenkel mit dem Trägerelement fest verbunden sind.

Eine zusätzliche Sturmsicherung ist nicht erforderlich, wenn der obere Endabschnitt der Stütze als Kupplungselement ausgebildet ist, das mit einem korrespondierenden Kupplungsteil an dem abzustützenden firstnahen Trägerelement längsverschiebbar verbindbar ist, um ein Abheben des firstnahen Trägerelements zu verhindern.

Die Konfektionierung eines Trägerelements mit einer Stütze ist besonders einfach, wenn die Stütze am Trägerelement mit Rastverbindungselementen befestigbar ist.

Eine formschlüssige und längsverschiebbare Verbindung zwischen Stütze und firstnahem Trägerelement kann beispielsweise dadurch erreicht werden, daß das Trägerelement zumindest im Bereich seines traufseitigen Endabschnitts einen Längsschlitz und die Stütze einen knebelartigen Fortsatz aufweist. Der knebelartige Fortsatz einer Stütze kann durch den Längsschlitz des benachbarten firstnahen Trägerelements in dieses hineinragen. Diese längsverschiebbare Kupplung verhindert das Abheben des firstnahen Trägerelements, stellt aber in Längsrichtung ein Loslager dar, so daß Änderungen des Abstands der Dachlatten stets ausgeglichen werden.

Eine preiswerte Ausführung des Trägerelements ist möglich, wenn es als dünnwandiges Profil, vorzugsweise als Hohlprofil, ausgebildet ist. Vorzugsweise ist das Trägerelement über den größten Teil seiner Länge als nach unten offenes C-Profil ausgebildet.

Die Montage der plattenförmigen Bauelemente ist besonders einfach, wenn bezogen auf die Ebene der Dachunterkonstruktion die Höhe der Oberseite eines Trägerelements zumindest gleich der Höhe des Wasserfalzes einer seitlich benachbarten Dacheindeckungsplatte ist, so daß der dem Wasserfalz einer Dacheindeckungsplatte benachbarte Rand eines Bauelements den Wasserfalz überdeckend und der dem Deckfalz einer Dacheindeckungsplatte benachbarte Rand eines Bauelements an den Deckfalz stoßend verlegbar ist.

Besonders gefällig können plattenförmige Bauelemente wie photovoltaische Module in ein mit handelsüblichen flachen Dacheindeckungsplatten aus Beton oder Ton gedecktes Schrägdach integriert werden. Flache Dacheindeckungsplatten aus Beton sind üblicherweise 42 cm lang, 33 cm breit und 2,2 cm hoch.

Sie haben eine Deckbreite von 30 cm und je nach Dachneigung eine Decklänge von 31 cm bis 34 cm. Die Höhe des Wasserfalzes beträgt 1,2 cm über der Unterkante, so daß etwa 1 cm dicke photovoltaische Module bündig mit der Oberseite der Dacheindeckungsplatten verlegt werden können.

Das Einlegen und Auswechseln eines Moduls ist ohne Werkzeug möglich, wenn am traufseitigen Ende eines Trägerelements eine den Rand eines plattenförmigen Bauelements hakenartig umgreifende Aufnahme vorgesehen ist. Vorteilhafterweise ist die Basis der etwa in Form eines liegenden U ausgeführten Aufnahme höher als die Dicke eines in diese eingeschobenen Bauelements, so daß auch bei windschiefer Lage von zwei dasselbe Bauelement tragenden Trägerelemente keine Verwindungskräfte auf das Bauelement einwirken. Eine elastische oder plastisch verformbare Zwischenlage kann Zwischenräume ausfüllen.

Ein Modul kann bei der Montage in Richtung First bis an die Stützen der Trägerelemente geschoben, dann auf die Trägerelemente aufgelegt und anschließend in Traufrichtung in die Aufnahme eingeschoben werden, wenn der Abstand zwischen der Basis der Aufnahme am traufseitigen Ende und der Stütze am firstseitigen Ende zumindest um die Länge des Hakens der Aufnahme größer ist als die Länge des plattenförmigen Bauelements. Das Herausnehmen erfolgt in umgekehrter Reihenfolge.

Ein Beschädigung der Unterseite des Bauelements durch ein Befestigungselement zur sturmsicheren Befestigung des Trägerelements wird verhindert, wenn am firstseitigen Ende des Trägerelements eine Lagerung für ein Befestigungselement zur Befestigung an der Dachunterkonstruktion vorgesehen ist. Wird als Verbindungselement eine Schraube verwendet, so wird empfohlen, auf der Oberseite des Trägerelements eine Einsenkung zur Lagerung des Schraubenkopfs vorzusehen.

Die paßgenaue Verlegung der plattenförmigen Bauelemente wird erleichtert, wenn am firstseitigen Ende eines Trägerelements auf der Unterseite ein Vorsprung angeordnet ist, der ein Einhängen an der Dachunterkonstruktion ermöglicht. Dieser Vorsprung wirkt ähnlich wie eine Einhängenase einer Dacheindeckungsplatte, indem er das Trägerelement in Längsrichtung zur firstseitigen Oberkante der Dachlatte justiert. Der traufseitige Rand des Bauelements wird von der Aufnahme des Trägerelements gehalten. Ist der Abstand zwischen Vorsprung und Basis der Aufnahme gleich dem Abstand zwischen Einhängenase und traufseitigem Rand einer benachbarten Dacheindeckungsplatte, so ergibt sich für mit dem erfindungsgemäßen Trägerelement verlegte Bauelemente, insbesondere für photovoltaische Module die gleiche geometrische Lage wie für die benachbarten Dacheindeckungsplatten, unabhängig vom Abstand der Dachlatten und der tatsächlich am Dach vorgesehenen Überdeckung.

In der Zeichnung ist ein bevorzugtes Ausführungsbeispiel der Erfindung dargestellt, das im folgenden näher erläutert wird.

Es zeigt
- Fig. 1: ein erfindungsgemäßes Trägerelement in der Draufsicht,
- Fig. 2: das Trägerelement aus Fig. 1 im Längsschnitt II - II,
- Fig. 3: das Trägerelement aus Fig. 1 im Teilschnitt III - III und
- Fig. 4: zwei montierte Trägerelemente in der Seitenansicht.

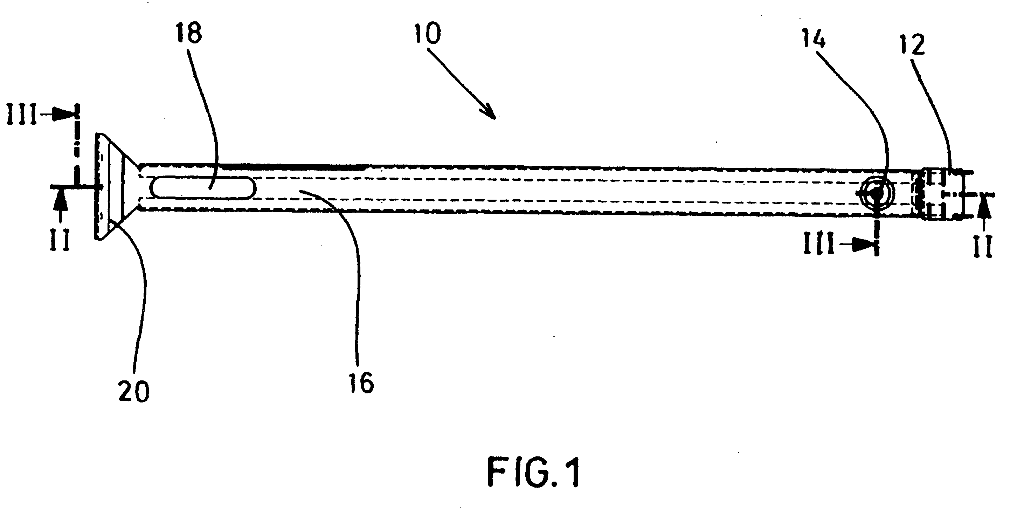

Fig. 1 zeigt ein aus nichtrostendem Stahlblech gestanztes und abgekantetes Trägerelement 10. An seinem firstseitigen Ende ist eine Stütze 12 vorgesehen, auf die ein benachbartes gleiches Trägerelement aufgelegt werden kann. Als Lagerung 14 für ein Befestigungsmittel zur Befestigung auf einer Dachlatte ist auf der Oberseite des Trägerelements 10 eine Einsenkung vorgesehen, in der beispielsweise der Kopf einer Schraube gelagert werden kann. Das Trägerelement 10 ist über fast seine gesamte Länge als nach unten offenes C-Profil ausgeführt, das auf der Unterseite einen Längsschlitz 16 aufweist. Im Bereich des traufseitigen Endabschnitts ist auf der Oberseite ein Langloch 18 vorgesehen, durch welches das Befestigungsmittel eines darunter befindlichen Trägerelements erreichbar ist. Am traufseitigen Ende ist eine U-förmige Aufnahme 20 für ein Bauelement angeordnet. Die Aufnahme 20 ist breiter als das C-Profil des Trägerelements 10.

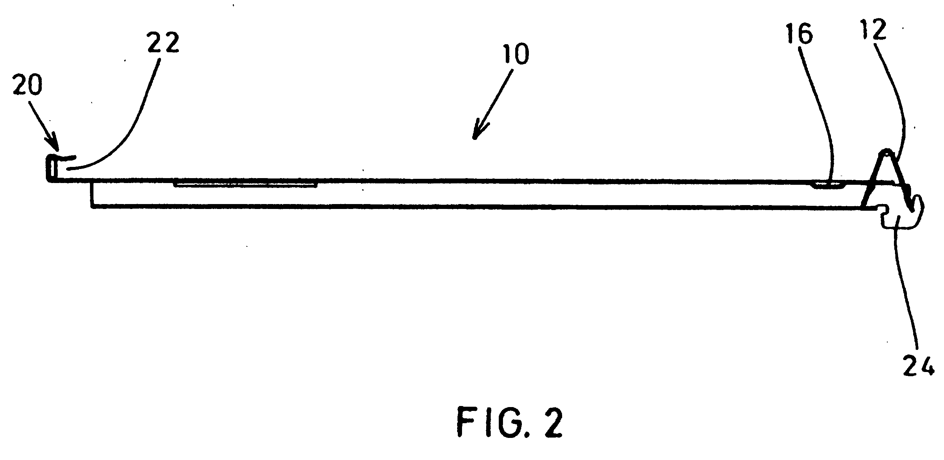

Fig. 2 zeigt die Anordnung von Stütze 12 und Aufnahme 20 deutlich im Längsschnitt. Die Aufnahme 20 überragt den C-profilierten Bereich des Trägerelements 10. Dadurch kann sich das Material bei großen Verwindungskräften infolge durchgebogener Dachlatten verformen und somit die Beschädigung eines aufgelegten Bauelements vermeiden. Die Basis der U-förmigen Aufnahme 20 ist mit einem Streifen 22 aus elastischem Material belegt. Die Stütze 12 ist als Bock aus abgewinkeltem Blech ausgebildet, wobei die Enden der Schenkel am firstseitigen Ende des Trägerelements 10 befestigt sind. Die Kante der Abwinkelung der Stütze 12 verläuft quer zur Längsachse des Trägerelements 10. Unterhalb der Stütze 12 ist ein Vorsprung 24 dargestellt, der wie die Einhängenase einer Dacheindeckungsplatte an einer Dachlatte eingehängt werden kann.

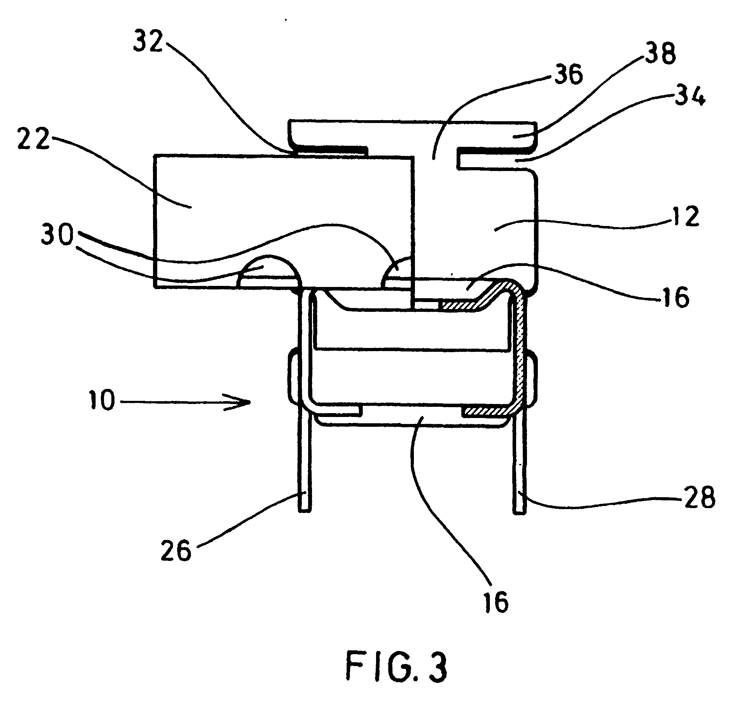

In Fig. 3 im Teilschnitt III - III des Trägerelements 10 aus Fig. 1 ist in der linken Bildhälfte die Ausführung der Aufnahme 20 und in der rechten Bildhälfte die Ausführung der Stütze 12 besonders gut zu erkennen. Auf der Unterseite des Trägerelements 10 ragen am firstseitigen Ende Vorsprünge 26 und 28 hervor. Im Bereich der unteren Kante der Aufnahme 20 sind Durchbrüche 30 vorgesehen, die den Austritt von Flüssigkeit ermöglichen.

An der bockförmigen Stütze 12 sind in geringem Abstand zur Oberkante beidseitig von den Rändern ausgehende Schlitze 32, 34 angebracht. Der obere Endabschnitt der Stütze 12 ist auf diese Weise mit einfachen Mitteln als knebelartiger Fortsatz 38 ausgebildet, wobei das Material zwischen den Schlitzen 32, 34 den Hals 36 und die Wandung im Bereich der Oberkante den Knebel bildet. In die Schlitze 32, 34 kann ein mit dem Trägerelement 10 identisches abzustützendes benachbartes Trägerelement eingeschoben werden, so daß der Hals 36 formschlüssig im Längsschlitz 16 und der knebelartige Fortsatz 38 innerhalb des benachbarten Trägerelements ruht.

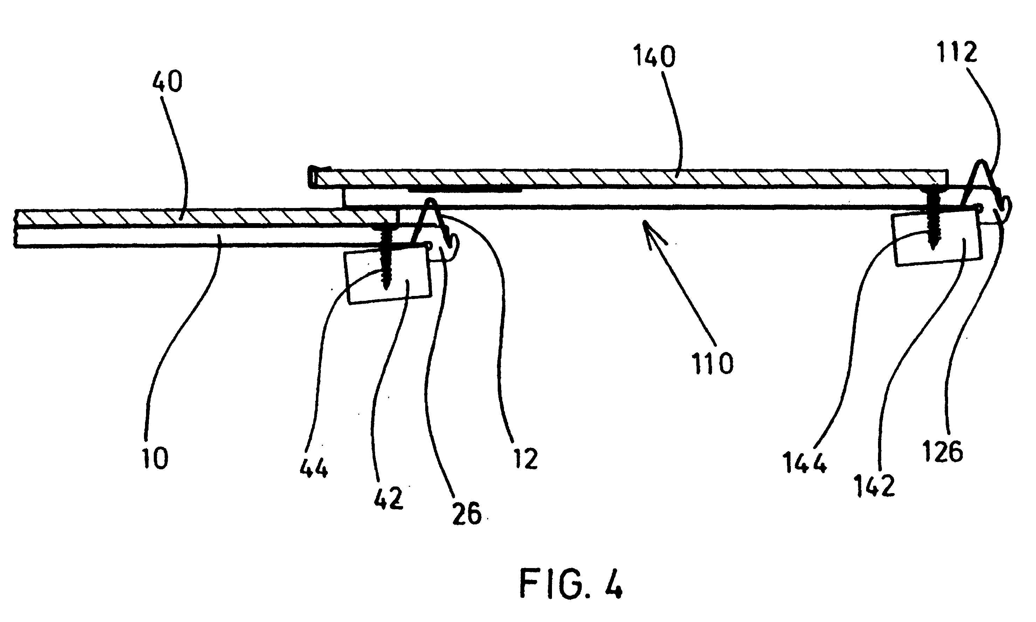

Fig. 4 zeigt zwei schuppenartig eingedeckte flache plattenförmige Bauelemente 40, 140 auf Trägerelementen 10 bzw. 110 im Längsschnitt, wobei das firstnahe Trägerelement 110 auf dem zur Traufe hin benachbarten Trägerelement 10 abgestützt ist. Die Bezugszeichen bezeichnen die gleichen Teile wie in Fig. 1 bis 3, dem Trägerelement 110 sind um 100 höhere Bezugszeichen zugeordnet. Am traufseitigen Ende ist, wie hier am Trägerelement 110 dargestellt, die U-förmige Aufnahme angeformt, die den traufseitigen Rand des aufliegenden Bauelements 140 klauenartig umgreift. Jedes der Trägerelemente 10, 110 liegt an seinem firstseitigen Ende auf einer Dachlatte 42 bzw. 142 auf und ist an dieser mit einem als Schraube ausgeführten Befestigungselement 44, 144 befestigt. Am Trägerelement 110 ist beispielhaft die für alle Trägerelemente prinzipiell gleiche Abstützung des traufseitigen Endes dargestellt, das längsverschiebbar mittels einer Stütze 12 auf dem firstseitigen Ende des darunter liegenden Trägerelements 10 abgestützt ist.

Die Abstützung des firstnahen Trägerelements 110 erfolgt hierbei in einer Höhe, die zumindest gleich der Dicke des plattenförmigen Bauelements 40 ist. Auf diese Weise kann das firstnahe Trägerelement 110 bei der Montage gegenüber dem unteren Trägerelement 10 und dem daraufliegenden Bauelement 40 in Trauf-Richtung verschoben werden, bis sein firstseitiger Vorsprung 126 an der zum First weisenden Seite der Dachlatte 142 anliegt und sein traufseitiger Endabschnitt das untere Bauelement 40 überdeckt. Das auf dem firstnahen Trägerelement 10 aufliegende obere Bauelement 140 ist, bedingt durch den traufseitigen Endabschnitt des firstnahen Trägerelements 110, beabstandet zum unteren Bauelement 40 angeordnet, wobei es einen firstseitigen Randabschnitt des unteren Bauelements 40 überdeckt.

## Patentansprüche

1. Befestigungssystem mit einem flachen plattenförmigen Bauelement (40), insbesondere einem photovoltaischen Element, und einem Trägerelement (10) zum Befestigen eines flachen plattenförmigen Bauelements (40), insbesondere eines photovoltaischen Elements, auf einem Schrägdach, wobei das Trägerelement (10) in First-Traufe-Richtung verlegt an einer Dachunterkonstruktion befestigbar ist und mit einem in Firstrichtung benachbarten Trägerelement (110) gleicher Bauart längsverschiebbar in Kontakt steht, **dadurch gekennzeichnet, dass** am Trägerelement (10) eine Stütze (12) vorgesehen ist, deren Höhe größer als die Dicke des plattenförmigen Bauelements (40) ist und die das benachbarte Trägerelement (110) in einer Höhe oberhalb der Oberfläche des auf dem Trägerelement (10) aufliegenden plattenförmigen Bauelements (40) längsverschiebbar abstützt.

2. Befestigungssystem nach Anspruch 1, **dadurch gekennzeichnet, dass** die Stütze (12) auf der Oberseite des Trägerelements (10) im Bereich seines firstseitigen Endabschnitts angeordnet ist.

3. Befestigungssystem nach Anspruch 1 oder 2, **dadurch gekennzeichnet, dass** die Stütze (12) als separates Bauteil ausgebildet ist.

4. Befestigungssystem nach Anspruch 3, **dadurch gekennzeichnet, dass** die Stütze (12) am Trägerelement (10) mit Rastverbindungselementen befestigbar ist.

5. Befestigungssystem nach einem der Ansprüche 1 bis 4, **dadurch gekennzeichnet, dass** das Trägerelement (10) zumindest im Bereich seines traufseitigen Endabschnitts einen Längsschlitz (16) und die Stütze (12) einen knebelartigen Fortsatz (38) aufweist.

6. Befestigungssystem nach einem der Ansprüche 1 bis 5, **dadurch gekennzeichnet, dass** das Trägerelement (10) als dünnwandiges Profil ausgebildet ist.

7. Befestigungssystem nach einem der Ansprüche 1 bis 6, **dadurch gekennzeichnet, dass** am in montierten Zustand traufseitigen Ende des Trägerelements (10) eine das plattenförmige Bauelement hakenartig umgreifende Aufnahme (20) vorgesehen ist.

8. Befestigungssystem nach einem der Ansprüche 1 bis 7, **dadurch gekennzeichnet, dass** am firstseitigen Ende des Trägerelements (10) eine Lagerung (14) für ein Befestigungselement (44) zur Befestigung an der Dachunterkonstruktion (42) vorgesehen ist.

9. Befestigungssystem nach einem der Ansprüche 1 bis 8, **dadurch gekennzeichnet, dass** am firstseitigen Ende des Trägerelements (10) auf der in montierten Zustand Unterseite ein Vorsprung (24, 26, 28) angeordnet ist, der ein Einhängen an der Dachunterkonstruktion (42) ermöglicht.

## Claims

1. Fixing system with a flat, sheet-type construction element (40), particularly a photovoltaic element, and a support element (10) for fastening a flat, sheet-type construction element (40), particularly a photovoltaic element, on a pitched roof, the support element (10), laid in ridge-eaves direction, being able to be fixed on a roof substructure and being in contact so that it can slide longitudinally with an adjacent support element (110) in the ridge direction of an identical design, **characterised in that** a support bracket (12) is provided on the support element (10), the height of which is greater than the thickness of the sheet-type construction element (40) and which supports the adjacent support element (110) at a height above the surface of the sheet-type construction element (40), resting on the support element (10), so that the said construction element can slide longitudinally.

2. Fixing system according to claim 1, **characterised in that** the support bracket (12) is arranged on the upper side of the support element (10) in the region of its end zone on the ridge side.

3. Fixing system according to claim 1 or 2, **characterised in that** the support bracket (12) is designed as a separate component.

4. Fixing system according to claim 3, **characterised in that** the support bracket (12) can be fixed to the support element (10) with latching connection elements.

5. Fixing system according to one of the claims 1 to 4, **characterised in that** the support element (10) has a longitudinal slit (16) at least in the region of its end zone on the eaves side and the support bracket (12) has a tongue-shaped extension (38).

6. Fixing system according to one of the claims 1 to 5, **characterised in that** the support element (10) takes the form of a thin-walled profile.

7. Fixing system according to one of the claims 1 to 6, **characterised in that** when assembled the support element (10) is provided with a recess (20) on its eaves end which surrounds the sheet-type construction element like a hook.

8. Fixing element according to one of the claims 1 to 7, **characterised in that** a mounting (14) for a fixing element (44) for fixing on the roof substructure (42) is provided on the ridge side end of the support element (10).

9. Fixing system according to one of the claims 1 to 8, **characterised in that** a projection (24, 26, 28) is arranged on the ridge side end of the support element (10) on the underside when assembled, the said projection enabling suspension on the roof substructure (42).

## Revendications

1. Système de fixation avec un élément de construction plat en forme de panneau (40), notamment un élément photovoltaïque et avec un élément de support (10) pour la fixation d'un élément de construction plat en forme de panneau (40), notamment d'un élément photovoltaïque, sur un toit en pente, où l'élément de support (10) peut être fixé, en étant posé dans une direction faîte-gouttière à une sous-construction de toit et est en contact d'une manière déplaçable longitudinalement avec un élément de support (110) de même type de construction avoisinant dans la direction du faîte, **caractérisé en ce qu'**il est prévu à l'élément de support (10) un soutien (12) dont la hauteur est plus grande que l'épaisseur de l'élément de construction en forme de panneau (40) et qui soutient d'une manière déplaçable longitudinalement l'élément de support avoisinant (110) à une hauteur au-dessus de la surface de l'élément de construction en forme de panneau (40) reposant sur l'élément de support (10).

2. Système de fixation selon la revendication 1, **caractérisé en ce que** le soutien (12) est disposé au côté supérieur de l'élément de support (10) au voisinage de son tronçon d'extrémité côté faîte.

3. Système de fixation selon la revendication 1 ou 2, **caractérisé en ce que** le soutien (12) est réalisé comme un composant séparé.

4. Système de fixation selon la revendication 3, **caractérisé en ce que** le soutien (12) peut être fixé à l'élément de support (10) au moyen d'éléments d'assemblage encliquetables.

5. Système de fixation selon l'une des revendications 1 à 4, **caractérisé en ce que** l'élément de support (10) présente au moins au voisinage de son tronçon d'extrémité côté gouttière une fente longitudinale (16) et le soutien (12) un prolongement (38) en forme de garrot.

6. Système de fixation selon l'une des revendications 1 à 5, **caractérisé en ce que** l'élément de support (10) est réalisé comme profilé à paroi mince.

7. Système de fixation selon l'une des revendications 1 à 6, **caractérisé en ce qu'**il est prévu à l'extrémité côté gouttière, à l'état montré, de l'élément de support (10) un logement (20) entourant l'élément de construction en forme de panneau à la manière d'un crochet.

8. Système de fixation selon l'une des revendications 1 à 7, **caractérisé en ce qu'**il est prévu à l'extrémité côté faîte de l'élément de support (10) un palier (14) pour un élément de fixation (44) pour la fixation à la sous-construction de toit (42).

9. Système de fixation selon l'une des revendications 1 à 8, **caractérisé en ce qu'**il est disposé à l'extrémité côté faîte de l'élément de support (10) au côté inférieur, à l'état monté, une saillie (24, 26, 28) qui permet un accrochage à la sous-construction de toit (42).
